# FASCICULE DE BREVET EUROPEEN

(11) **EP 0 791 490 B1**
(45) Date de publication et mention de la délivrance du brevet: **26.01.2000**
(21) Numéro de dépôt: 97102261.1
(22) Date de dépôt: 13.02.1997
(51) Int. Cl.: B60C 29/02

(54) **Valve à pied elliptique**
Reifenventil mit elliptischem Sitz
Tyre valve with elliptic seat

(30) Priorité: 22.02.1996 FR 9602314
(43) Date de publication de la demande: 27.08.1997
(73) Titulaire: COMPAGNIE GENERALE DES ETABLISSEMENTS MICHELIN-MICHELIN & CIE, F-63040 Clermont-Ferrand Cédex 01 (FR)
(72) Inventeur: Botte, Patrick, 63118 Cebazat (FR)
(74) Mandataire: Dequire, Philippe Jean-Marie Denis

(56) Documents cités:
- FR-A- 1 137 853
- GB-A- 725 775
- US-A- 2 864 426

## Description

L'invention a pour objet une valve d'encombrement réduit destinée à être fixée de façon étanche dans la jante d'une roue pour assurer l'alimentation en air d'un pneumatique sans chambre à air monté sur cette jante et plus particulièrement une valve destinée à équiper des jantes de pneumatiques poids lourd en tôle d'acier.

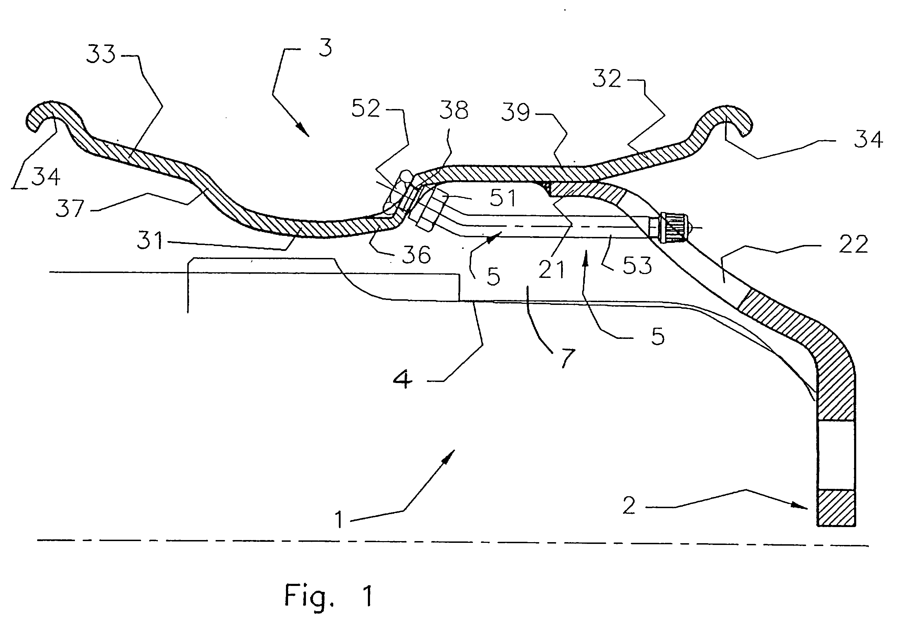

Les jantes de roues en tôle d'acier de pneumatiques poids lourd, telle celle présentée à la figure 1, ont classiquement leur zone d'assemblage entre la jante et le disque de roue placée entre le siège de bourrelet du côté du disque de roue et le flanc de la gorge de montage. Préférentiellement, cette zone de liaison est placée à proximité immédiate de l'extrémité du siège du bourrelet. Le trou de valve est disposé dans le flanc extérieur de la gorge de montage de la jante. La tige de valve est introduite dans le trou de valve du côté radialement extérieur de la jante (correspondant à l'intérieur du volume pneumatique après montage de celui-ci) et est bloquée par un écrou vissé du côté intérieur de la jante. Le pied de valve comporte un évidement annulaire pour loger un joint annulaire d'étanchéité. Lors du blocage, l'écrou est serré à un couple donné. La tige de valve, coudée, se prolonge jusqu'à sortir du disque de la roue qu'elle traverse par un ajour. Ce faisant, la tige de valve représente une protubérance dans le volume situé entre la jante et l'essieu, volume où sont logés le moyeu et les organes de freinage.

On observe parfois des dégonflements intempestifs des pneumatiques, dus à des bris de valve. Avec des essieux munis de freins à disques, on remarque la possibilité de passage, entre le fond de la jante et le disque de frein, de corps étrangers qui se trouvent entraînés en rotation dans ces cavités, et peuvent se trouver coincés entre des pièces y faisant saillie : en particulier entre la tige de valve qui tourne avec la roue et l'étrier de frein qui est fixe. Le passage de corps étrangers dans ces cavités est facilité par l'espace libre entre la jante et le disque de frein. On observe alors des chocs mécaniques causés par ces corps étrangers coincés entre des pièces mobiles et fixes. Ces chocs peuvent être assez graves pour casser des pièces métalliques comme les tiges de valve ou endommager la jante ou les pièces constituant l'étrier de frein, et le système de freinage en général. Cela conduit à des situations critiques, que ce soit par défaut de freinage ou par mise à plat brutale, en plus des problèmes de maintenance.

Une solution consiste à disposer le trou de valve de telle sorte que, la tige de valve soit placée en-dehors de la cavité définie par la jante, le disque de roue et les organes de freinage. C'est-à-dire que le trou de valve débouche dans une zone située axialement à l'extérieur du disque de roue. De telles dispositions pour le trou de valve sont classiques pour des roues tourisme ou pour certaines roues moulées en alliage pour véhicules utilitaires mais n'ont encore pas été adaptées aux roues en tôle de véhicules utilitaires.

De fait, la demanderesse a constaté que l'adaptation aux roues en tôle pour véhicules utilitaires de la solution précédente peut entraîner une dégradation considérable de la résistance à la fatigue des roues obtenues.

Pour obtenir des roues acceptables en fatigue, la demanderesse a découvert qu'il fallait placer la zone d'assemblage entre le disque et la jante le plus près possible de l'extrémité du siège de bourrelet du côté du disque. Cette solution réduit de façon considérable l'espace disponible pour la tige de valve du côté radialement intérieur de la jante et en particulier, les valves classiquement utilisées ne peuvent plus l'être parce que la tige de valve ne peut pas être coudée avec un angle suffisant pour pouvoir être montée sur la jante tout en permettant le vissage de l'écrou.

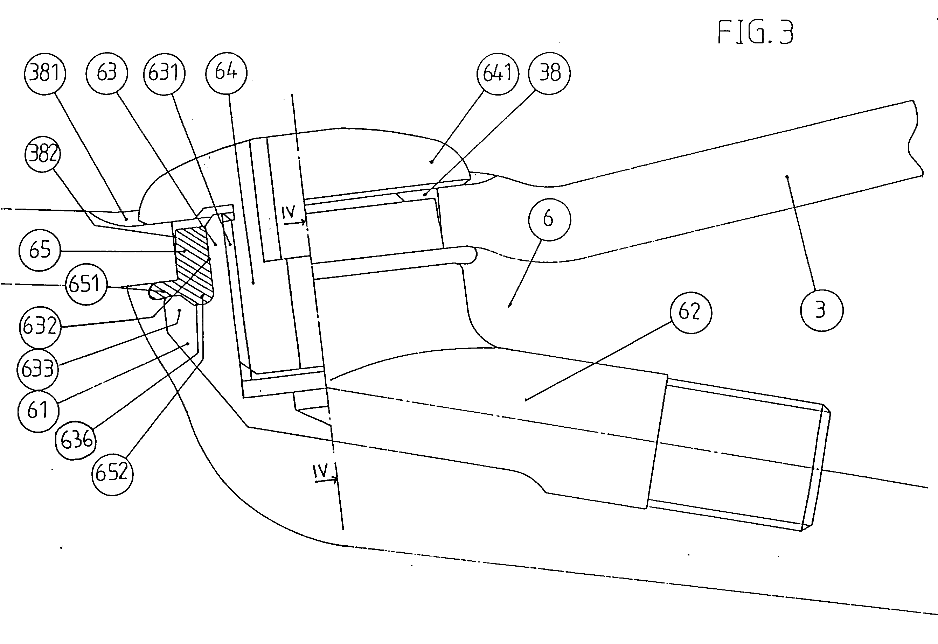

Une valve dont la tige est orientée perpendiculairement à l'axe du trou de valve est présentée par le brevet US 2,864,426. Cette valve est montée de façon inversée, le pied de valve comporte une tubulure introduite à travers le trou de valve à partir du côté radialement intérieur de la jante et bloquée par un écrou vissé du côté extérieur de la jante. Le pied de valve présente un évidement annulaire destiné à loger un joint d'étanchéité et, dans le cas d'un 〈〈 joint torique 〉〉 (figure 1), une surface d'appui contre la surface de la jante elle aussi annulaire. Dans le cas d'un 〈〈 joint cornière 〉〉 (figure 3), le pied de valve ne comprend pas de surface d'appui annulaire mais une simple collerette de protection du joint. Le pied de valve comprend enfin une chambre de raccord entre la tubulure précédente et une tige disposée perpendiculairement.

Cette solution présente plusieurs inconvénients, le premier est lié au fait que l'écrou de blocage est situé complètement à l'extérieur de la jante. En conséquence, la surface de connexion mécanique est réduite ce qui entraîne de problèmes de résistance mécanique, ou si l'on augmente cette longueur, cela implique une saillie importante à l'intérieur de la cavité pneumatique, ce qui peut blesser le talon du pneumatique lors de son montage.

Un autre problème est lié à l'encombrement transversal de la valve qui est encore trop important, cette valve ne peut donc pas résoudre le problème posé.

L'invention a pour objet une valve qui améliore sensiblement les problèmes précédents.

L'invention a pour objet une valve destinée à être attachée de façon amovible à la jante d'un pneumatique poids lourd sans chambre en passant à travers un trou de valve, dans laquelle les moyens de fixation étanche à la jante comprennent :
- un pied de valve avec une tubulure destinée à traverser ladite jante ayant un épaulement perpendiculaire à l'axe de ladite tubulure formant une première surface d'appui contre une première surface de ladite jante, ledit épaulement présentant des moyens pour maintenir un joint d'étanchéité,
- des moyens de blocage formant une seconde surface d'appui contre une seconde surface de ladite jante et coopérant avec ladite tubulure pour comprimer axialement ledit joint d'étanchéité entre ledit épaulement et ladite première surface de la jante,
caractérisée en ce que ladite première surface d'appui est constituée de deux zones d'appui diamétralement opposées.

Contrairement aux valves classiques à joint torique, la zone d'appui du pied de valve n'est pas annulaire, mais est constituée de deux zones diamétralement opposées ce qui permet de réduire le diamètre du pied de valve dans la direction de la tige de la valve. Et c'est bien cette direction transversale qui est critique. Dans la direction perpendiculaire, circonférentielle, les zones d'appui peuvent s'étendre librement. En conséquence, l'épaulement du pied de valve peut avantageusement prendre une forme générale elliptique. La fonction de cette surface d'appui, permettre un blocage du pied de valve contre la surface de la jante à couple constant avec un écrasement contrôlé axialement du joint d'étanchéité n'est pas modifiée.

Avantageusement, le montage de la valve selon l'invention peut être similaire à celui de la valve divulguée par le brevet US 2,864,426 mais, en dotant la tubulure du pied de valve d'un filetage interne destiné à coopérer avec une vis de blocage introduite à partir de la partie radialement extérieure de la jante. Cette solution a l'avantage de garantir une zone de connexion mécanique entre la tubulure et la vis de blocage de hauteur axiale supérieure à l'épaisseur de la jante ce qui garantit une excellente résistance mécanique à l'assemblage. De plus, la saillie de la vis de blocage du côté radialement extérieur de la jante est très réduite.

De préférence, le joint d'étanchéité utilisé assure cette étanchéité non seulement entre la surface de la jante et l'épaulement du pied de valve mais aussi entre la paroi du trou de valve et la paroi extérieure de la tubulure du pied de valve.

L'invention est maintenant illustrée par les dessins suivants :
- la figure 1 présente une coupe axiale d'une jante de roue classique d'un véhicule utilitaire avec une valve usuelle ;
- la figure 2 est une coupe similaire d'une jante équipée d'une valve selon l'invention débouchant à l'extérieur du disque de roue ;
- la figure 3 est un détail de la figure 2 présentant le montage d'une valve selon l'invention ;
- la figure 4 présente une coupe selon IV-IV, tel qu'indiqué à la figure 3 d'une valve selon l'invention ;
- la figure 5 est une coupe axiale d'une valve selon l'invention à montage conventionnel ; et
- la figure 6 est une vue en perspective du pied d'une valve selon l'invention similaire à celle de la figure 5.

La figure 1 présente une coupe d'une roue 1 en tôle classique, conforme aux recommandations de l'Organisation Technique Européenne du Pneumatique et de la Jante (ETRTO).

Cette roue 1 pour véhicule utilitaire, en tôle d'acier et en une seule pièce, est composée d'un disque 2, d'une jante 3 et d'une valve 5. La jante comprend une gorge centrale de montage 31, deux sièges de bourrelet, côté disque 32 et côté opposé 33, et deux rebords 34. La gorge 31 est reliée au siège 33 du côté opposé au disque 2 par un flanc 37 et, du côté du disque 2 par un flanc 36 suivi par une zone de liaison 39 entre la jante 3 et le disque 2. Cette liaison est réalisée par soudure de l'extrémité du disque 2 sur la paroi radialement intérieure de la zone de liaison 39. Le trou de valve 38 est situé dans le flanc de gorge 36 du côté du disque 2. En conséquence, la tige de valve 53 se situe à l'intérieur du disque 2 de la roue et traverse le disque 2 par l'ajour 22. Le pied de valve 52 est monté radialement à l'extérieur de la jante 3 et est fixé par vissage de l'écrou 51, radialement à l'intérieur de la jante 3.

Sur cette figure apparaît aussi le contour extérieur des organes de freinage 4 du véhicule. On constate que la cavité 7 entre la jante 3, le disque 2 et les organes de freinage 4 est relativement réduite, ce qui montre la vulnérabilité de la valve 5 lorsque des objets tels des pierres pénètrent à l'intérieur.

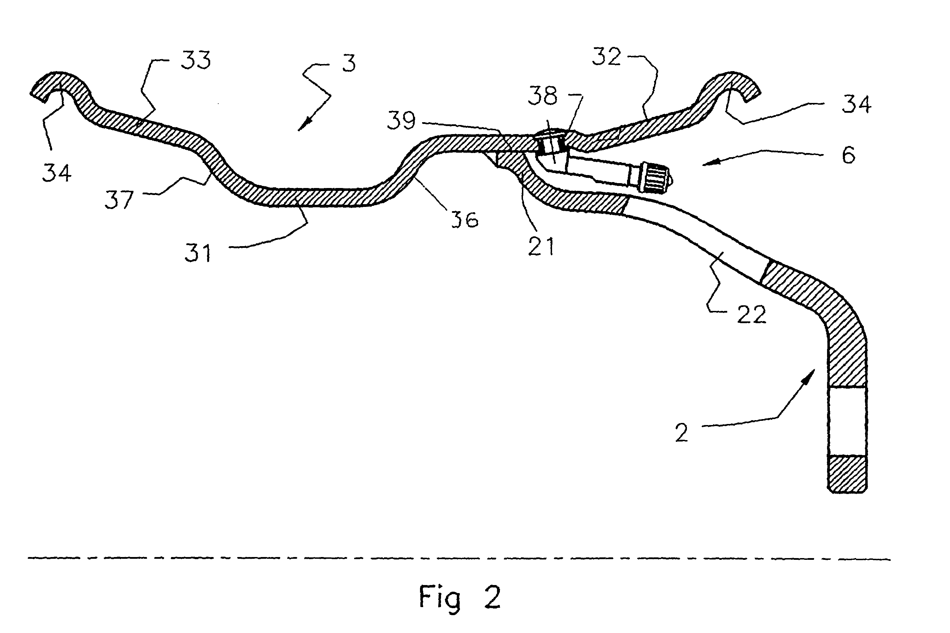

La figure 2 présente une coupe de roue avec un trou de valve 38 situé entre le siège côté disque 32 et la zone de liaison disque/jante 39. La valve équipant cette roue ne peut plus être détériorée par des objets s'introduisant dans la cavité 7. En revanche, il n'est plus du tout possible d'utiliser pour cette roue une valve identique à celle de la figure 1 car la tige de valve 53 ne peut pas être courbée suffisamment pour s'adapter au disque de roue tout en permettant le passage de l'écrou 51.

La figure 3 présente un agrandissement de la figure 2 illustrant le montage sur cette roue d'une valve 6 selon l'invention. Le pied de valve 61 de la valve 6 est monté radialement à l'intérieur de la jante 3. Une tige de valve 62 s'étend à partir de ce pied de valve 61 à l'extérieur du disque 2 et est équipée dans sa partie terminale des moyens usuels (non représentés) d'obturation pour permettre les gonflage/dégonflage des pneumatiques.

Le pied de valve 61 comprend une tubulure 63 cylindrique destinée à traverser le trou de valve 38 de la jante 3. Cette tubulure 63 présente un filetage 631 dans sa paroi interne qui coopère avec une vis 64 pour assurer la fixation de la valve 6 sur la jante 3. La tubulure 63 fait ainsi office d'écrou. Les hauteurs axiales des filetages de la tubulure 63 et de la vis 64 sont notablement supérieures à l'épaisseur de la jante 3 pour garantir une excellente tenue mécanique de l'assemblage. De préférence, la tête 641 de la vis 64 est logée, au moins partiellement, dans un évidement 381 réalisé autour du trou de valve 38 du côté radialement extérieur de la jante 3. Cela permet de réduire la saillie faite par cette tête de vis 641 à l'extérieur de la surface de la jante, saillie qui autrement pourrait endommager un talon du pneumatique lors de son montage.

La paroi extérieure 632 de la tubulure 63 est lisse et se termine du côté du pied de valve 61 par un épaulement 633 sur lequel s'appuie la base 651 d'un joint d'étanchéité 65. Ce joint d'étanchéité 65 est disposé tout autour de la paroi extérieure 632 de la tubulure 63 pour assurer une étanchéité entre cette paroi 632 et la paroi 382 du trou de valve 38. Sa base 651 présente une collerette annulaire pour venir en appui contre l'épaulement 633 de la tubulure 63 et ainsi assurer une étanchéité entre cet épaulement 633 de la tubulure et la paroi radialement intérieure de la jante 3 autour du trou de valve 38.

Un tel joint est usuellement appelé un << joint cornière >> et, préférentiellement, sa base comprend une collerette 652 destinée à s'adapter dans le logement annulaire 636 de l'épaulement 633 de la tubulure 63. Dans le plan de cette figure 3, il n'y a pas d'appui direct entre l'épaulement 633 de la tubulure 63 et la surface radialement intérieure de la jante 3 autour du trou de valve 38.

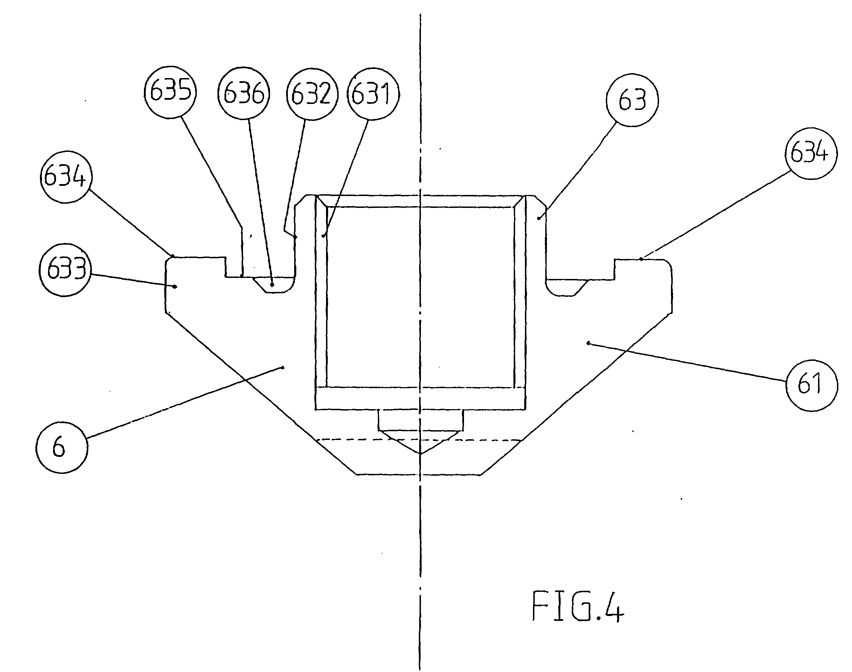

La figure 4 est une coupe selon IV-IV tel qu'indiqué à la figure 3 du pied de valve 61. Cette coupe est donc orientée circonférentiellement relativement à la roue lorsque la valve 6 est montée sur une roue. Dans ce plan, et en prenant pour référence l'axe de la tubulure 63, l'épaulement 633 de cette tubulure 63 se termine radialement par deux zones 634 surélevées axialement dont la surface extérieure plane est destinée à venir en appui directement contre la surface de la jante 3, de part et d'autre du trou de valve 38. L'épaulement 633 comprend donc un évidement annulaire 635 destiné à recevoir la base 651 du joint d'étanchéité 65 suivie de ces deux zones 634 d'appui contre la surface de la jante. Les dimensions axiale et radiale de l'évidement 635 relativement à la paroi extérieure 632 de la tubulure 63 sont tels que le joint d'étanchéité 65 peut être comprimé lors du serrage suffisamment pour assurer une bonne étanchéité sans être endommagé lorsque les zones d'appui 634 entrent en butée sur la face radialement interne de la jante. Préférentiellement, l'épaulement 633 a une forme générale elliptique.

La présence de ces zones d'appui 634 avec cette orientation circonférentielle présente plusieurs avantages décisifs : elles assurent un blocage métal contre métal lors de la fixation de la valve 6 sur la jante 3 ce qui autorise un serrage avec un couple bien déterminé et reproductible. Ce mode de serrage usuel dans le cas des joints toriques avec une surface d'appui circonférentielle ne l'est pas du tout dans le cas des valves usuelles équipées de joints cornières. Car alors, usuellement, le serrage est assuré caoutchouc contre métal ce qui nécessite une plus grande attention notamment lors de resserrages ultérieurs si l'on ne veut pas détruire le joint.

D'autre part, l'orientation circonférentielle des deux zones d'appui relativement à la jante 3 ne pénalise pas l'encombrement de la valve dans la direction transversale. Au contraire, relativement à une valve ayant une étanchéité classique avec un joint torique, un valve selon l'invention adaptée au même diamètre de trou de valve permet une diminution de l'ordre de 10 % de l'encombrement de la valve montée dans la direction transversale avec une étanchéité nettement plus robuste. En conséquence, il est possible de monter cette valve 6 sur la jante 3 en dépit de la position très proche du disque 2 (voir figures 2 et 3).

Enfin, l'association entre ces deux zones 634 d'appui direct diamétralement opposées et un joint d'étanchéité 65 de type cornière assurant une étanchéité très robuste permet de conserver un état de surface usuel de la surface radialement intérieure de la jante autour du trou de valve sans nécessiter une planéité parfaite nécessaire dans le cas de joints toriques avec une surface d'appui directe circonférentielle.

L'invention n'est pas limitée aux valves à montage inversé qui viennent d'être décrites. Dans le cas des valves à montage usuel similaire à celui de la figure 1, la présence de deux zones d'appui diamétralement opposées permet de diminuer de façon substantielle l'encombrement du pied de valve dans la direction de l'axe de la roue sans que l'augmentation de l'encombrement longitudinal ne pénalise en aucune façon le montage de la valve.

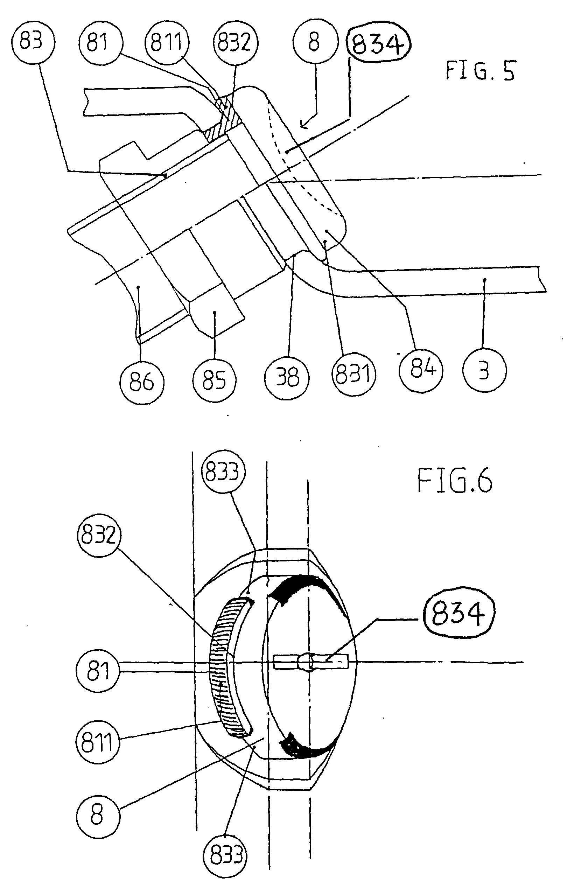

A titre d'exemple la figure 5 présente une valve 8 selon l'invention à montage conventionnel. Cette valve 8 présente un pied de valve 84 avec une tubulure 83 à introduire dans un trou de valve 38 à partir de la surface radialement extérieure de la jante 3 et coopérant avec un écrou 85 vissé du côté radialement intérieur de la jante. L'épaulement 831 de la tubulure 83, de forme sensiblement elliptique, comprend radialement un évidement 832 annulaire destiné à assurer l'étanchéité avec un joint d'étanchéité 81 suivie de deux zones d'appui 833 diamétralement opposées (voir figure 6). Le joint d'étanchéité 81 est un joint cornière de forme générale cylindrique avec une base 811 radialement élargie. A la figure 6, la valve 8 est en position montée sur une jante et on voit la base écrasée du joint cornière sortant de son logement 832.

La tubulure 83 se prolonge par une tige de valve 86 droite ou coudée. Relativement à une valve usuelle à joint torique 5, une telle valve 8, adaptée au même diamètre de trou de valve permet une diminution de l'ordre de 10 % de l'encombrement de la valve montée dans la direction axiale avec une étanchéité bien plus robuste et un état de surface de la surface de la jante autour du trou de valve du côté de l'appui ne nécessitant pas d'opération particulière de redressement pour en garantir la planéité.

Les figures 5 et 6 présentent aussi une encoche 834 destinée à maintenir en place la tubulure 83 lors du vissage de l'écrou 85.

## Revendications

1. Valve (6, 8) destinée à être attachée de façon amovible à une jante (3) pour pneumatique poids lourd sans chambre en passant à travers un trou de valve (38), dans laquelle les moyens de fixation étanche à la jante (3) comprennent :
- un pied de valve (61, 84) avec une tubulure (63, 83) destinée à traverser ladite jante (3) ayant un épaulement (633, 831) perpendiculaire à l'axe de ladite tubulure (63, 83) formant une première surface d'appui contre une première surface de ladite jante (3), ledit épaulement (633, 831) présentant des moyens (635, 832) pour maintenir un joint d'étanchéité (65, 81),
- des moyens de blocage (64, 85) formant une seconde surface d'appui contre une seconde surface de ladite jante (3) et coopérant avec ladite tubulure (63, 83) pour comprimer axialement ledit joint d'étanchéité (65, 81) entre ledit épaulement (633, 831) et ladite première surface de la jante (3),
caractérisée en ce que ladite première surface d'appui est constituée de deux zones d'appui (634, 833) diamétralement opposées.

2. Valve (6, 8) selon la revendication 1, dans laquelle le pied de valve (61, 84) se prolonge par une tige de valve (62, 86) orientée perpendiculairement au diamètre moyen reliant les deux zones d'appui (634, 833).

3. Valve (6, 8) selon l'une des revendications 1 et 2, dans laquelle l'épaulement (633, 831) du pied de valve (61, 84) a une forme généralement elliptique.

4. Valve (8) selon l'une des revendications 1 à 3, dans laquelle la première surface de la jante (3) est la surface radialement extérieure de ladite jante (3) et les moyens de blocage sont un écrou (85) destiné à être vissé sur la tubulure (83) pour venir en appui contre la surface radialement intérieure de la jante.

5. Valve (6) selon l'une des revendications 1 à 3, dans laquelle la première surface de la jante (3) est la surface radialement intérieure de ladite jante, ladite tubulure (63) présente une paroi intérieure filetée (631) et les moyens de blocage sont une vis (64) destinée à coopérer avec le filetage (631) de ladite tubulure (63).

6. Valve (6) selon la revendication 5, dans laquelle la paroi intérieure filetée (631) de ladite tubulure (63) a une hauteur radiale supérieure à l'épaisseur de la jante (3).

7. Valve (6, 8) selon l'une des revendications 1 à 6, dans laquelle le joint d'étanchéité (65, 81) a une forme générale sensiblement cylindrique avec une base élargie (651, 811), ledit joint (65, 81) entourant extérieurement la tubulure (63, 83) du pied de valve (61, 84) sur au moins une partie de sa hauteur axiale de sorte d'assurer une étanchéité entre ladite tubulure (63, 83) et la paroi du trou de valve (38), et ladite base élargie (651, 811) s'étendant radialement avec une hauteur axiale supérieure à celle d'un évidement (635, 832) de la tubulure (63, 83) du pied de valve (61, 84) de sorte d'assurer une étanchéité entre ledit épaulement (633, 831) et ladite première surface de la jante (3).

8. Jante (3) équipée d'une valve (6, 8) selon l'une des revendications 1 à 7.

## Patentansprüche

1. Ventil (6,8), das dazu bestimmt ist, abnehmbar an einer Felge (3) für einen schlauchlosen Schwerlastreifen angebracht zu werden, wobei es durch eine Ventilbohrung (38) hindurchläuft, in welcher Mittel zur dichten Befestigung an der Felge (3) die folgenden Merkmale aufweisen:
- einen Ventilfuß (61,84) mit einem Rohrstück (63,83), das dazu bestimmt ist, die genannte Felge (3) zu durchsetzen und eine Schulter (633,831) senkrecht zur Achse des genannten Rohrstücks (63,83) aufweist, die eine erste Fläche zur Anlage gegen eine erste Fläche der genannten Felge (3) aufweist, wobei die genannte Schulter (633,831) Mittel (635,832) zum Halten einer Dichtung (65,81) aufweist, und
- Blockiermittel (64,85), die eine zweite Fläche zur Anlage gegen eine zweite Fläche der genannten Felge (3) bilden und mit dem genannten Rohrstück (63,83) zusammenwirken, um axial die genannte Dichtung (65,81) zwischen der genannten Schulter (633,831) und der genannten ersten Oberfläche der Felge (3) zusammenzudrücken,
dadurch gekennzeichnet, daß die genannte erste Anlagefläche aus zwei Anlagezonen (634,833) gebildet ist, die diametral gegenüberliegen.

2. Ventil (6,8) nach Anspruch 1, worin der Ventilfuß (61,84) durch ein Ventilröhrchen (62,86) verlängert ist, das senkrecht zum mittleren Durchmesser ausgerichtet ist, der die beiden Anlagezonen (634,833) verbindet.

3. Ventil (6,8) nach einem der Ansprüche 1 und 2, worin die Schulter (633,831) des Ventilfußes (61,84) eine insgesamt elliptische Form aufweist.

4. Ventil (8) nach einem der Ansprüche 1 bis 3, worin die erste Oberfläche der Felge (3) die radial außen liegende Fläche der genannten Felge (3) ist und die Blockiermittel eine Mutter (85) sind, die dazu bestimmt ist, auf das Rohrstück (83) aufgeschraubt zu werden, um an der radial innen liegenden Fläche der Felge zur Anlage zu gelangen.

5. Ventil (6) nach einem der Ansprüche 1 bis 3, worin die erste Oberfläche der Felge (3) die radial innen liegende Fläche der genannten Felge ist, wobei das genannte Rohrstück (63) eine mit Gewinde versehene Innenwand (631) aufweist, und worin die Blockiermittel eine Schraube (64) sind, die dazu bestimmt ist, mit dem Gewinde (631) des genannten Rohrstücks (63) zusammenzuwirken.

6. Ventil (6) nach Anspruch 5, worin die mit Gewinde versehene Innenwand (631) des genannten Rohrstücks (63) eine radiale Höhe hat, die größer ist als die Dicke der Felge (3).

7. Ventil (6,8) nach einem der Ansprüche 1 bis 6, worin die Dichtung (65,81) eine allgemein im wesentlichen zylindrische Form mit einer vergrößerten Basis (651,811) aufweist, wobei die genannte Dichtung (65,81) von außen das Rohrstück (63,83) des Ventilfußes (61,84) auf mindestens einem Teil ihrer axialen Höhe derart umgibt, daß eine Abdichtung zwischen dem genannten Rohrstück (63,83) und der Wand der Ventilbohrung (38) sichergestellt ist, und worin die genannte vergrößerte Basis (651,811) sich radial mit einer axialen Höhe erstreckt, die größer ist als die einer Ausnehmung (635,832) des Rohrstücks (63,83) des Ventilfußes (61,84), und zwar derart, daß eine Abdichtung zwischen der genannten Schulter (633,831) und der genannten ersten Felgenfläche (3) sichergestellt ist

8. Felge (3), ausgestattet mit einem Ventil (6,8), nach einem der Ansprüche 1 bis 7.

## Claims

1. A valve (6, 8) intended to be attached removably to a rim (3) for a heavy-vehicle tubeless tyre by passing through a valve hole (38) in which the means for fixing in sealing manner to the rim (3) comprise:
- a valve foot (61, 84) with a tube (63, 83) intended to pass through said rim (3) having a shoulder (633, 831) perpendicular to the axis of said tube (63, 83) forming a first bearing surface against a first surface of said rim (3), said shoulder (633, 831) having means (635, 832) for holding a gasket (65, 81),
- locking means (64, 85) forming a second bearing surface against a second surface of said rim (3) and cooperating with said tube (63, 83) to compress said gasket (65, 81) axially between said shoulder (633, 831) and said first surface of the rim (3),
characterised in that said first bearing surface is formed of two diametrically opposed bearing zones (634, 833).

2. A valve (6, 8) according to Claim 1, in which the valve foot (61, 84) is extended by a valve stem (62, 86) oriented perpendicularly to the average diameter connecting the two bearing zones (634, 833).

3. A valve (6, 8) according to one of Claims 1 and 2, in which the shoulder (633, 831) of the valve foot (61, 84) has a generally elliptical shape.

4. A valve (8) according to one of Claims 1 to 3, in which the first surface of the rim (3) is the radially outer surface of said rim (3) and the locking means are a nut (85) intended to be screwed on to the tube (83) to come to bear against the radially inner surface of the rim.

5. A valve (6) according to one of Claims 1 to 3, in which the first surface of the rim (3) is the radially inner surface of said rim, said tube (63) having an inner threaded wall (631) and the locking means being a screw (64) intended to cooperate with the thread (631) of said tube (63).

6. A valve (6) according to Claim 5, in which the inner threaded wall (631) of said tube (63) has a radial height greater than the thickness of the rim (3).

7. A valve (6, 8) according to one of Claims 1 to 6, in which the gasket (65, 81) has a substantially cylindrical general shape with a widened base (651, 811), said gasket (65, 81) surrounding the tube (63, 83) of the valve foot (61, 84) on the outside over at least part of its axial height so as to ensure a seal between said tube (63, 83) and the wall of the valve hole (38), and said widened base (651, 811) extending radially with an axial height greater than that of a recess (635, 832) of the tube (63, 83) of the valve foot (61, 84) so as to ensure a seal between said shoulder (633, 831) and said first surface of the rim (3).

8. A rim (3) equipped with a valve (6, 8) according to one of Claims 1 to 7.
